## Europäisches Patentamt
## European Patent Office
## Office européen des brevets

(19)

(11) Numéro de publication : **0 130 944
B1**

(12) **FASCICULE DE BREVET EUROPÉEN**

(45) Date de publication du fascicule du brevet :
17.05.89

(21) Numéro de dépôt : 84810298.4

(22) Date de dépôt : 21.06.84

(51) Int. Cl.⁴ : $G\ 02\ B\quad 6/38$

(54) Procédé d'alignement d'un guide d'onde.

(30) Priorité : 24.06.83 CH 3444/83

(43) Date de publication de la demande :
09.01.85 Bulletin 85/02

(45) Mention de la délivrance du brevet :
17.05.89 Bulletin 89/20

(84) Etats contractants désignés :
AT BE CH DE FR GB IT LI LU NL SE

(56) Documents cités :
EP—A— 0 030 108
GB—A— 2 025 043
OPTICAL AND QUANTUM ELECTRONICS, vol. 9, no. 5, 1977, pages 393-397, Chapman and Hall Ltd., GB; R. ALTHAMMER: "Fully automatic system for the coupling alignment of optical fibres"
RESEARCH DISCLOSURE, no. 216, avril 1982, pages 131-132, Havant Hampshire, GB; "Automatic positioning and alignment equipment for optical fibres"

(73) Titulaire : FONDATION SUISSE POUR LA RECHERCHE EN MICROTECHNIQUE
Rue Jaquet-Droz 7
CH-2000 Neuchâtel 7 (CH)

(72) Inventeur : Edye, Thomas
58, rue Dufour
CH-2502 Bienne (CH)
Inventeur : Roussel, Jean-Paul
8 bis, boulevard Capdeville
F-09000 Foix (FR)
Inventeur : Parriaux, Olivier
Trois Rois 9
CH-1005 Lausanne (CH)

(74) Mandataire : Nithardt, Roland
CABINET ROLAND NITHARDT Attn: Cabinet MOSER & CIE Rue Edouard Verdan 15
CH-1400 Yverdon-les-Bains (CH)

EP 0 130 944 B1

Jouve, 18, rue St-Denis, 75001 Paris, France

## Description

La présente invention concerne un procédé d'alignement d'un guide d'onde par rapport à un composant optique d'excitation, sans contact entre les deux éléments.

On connaît de nombreux procédés de laboratoire pour aligner des guides de lumière et notamment des fibres optiques par rapport à d'autres fibres, à des sources de lumière ou à des composants optiques. Ces procédés sont généralement inutilisables dans l'industrie. En effet, au stade de la caractérisation industrielle, les composants de l'optique guidée doivent être testés individuellement mais avec rapidité, de manière reproductible et indépendante de l'habilité d'un opérateur, ce qui n'est pas exigé pour les techniques de laboratoire, où le facteur temps n'intervient pas et où les opérateurs sont habituellement des spécialistes bien au fait des techniques de manipulation de ces composants. Pour ces opérations de caractérisation industrielle, l'alignement constitue une opération provisoire qui doit se faire sans contact entre les composants en raison des risques de détérioration des surfaces.

L'optique guidée requiert une précision de dimension transverse inférieure ou égale à la longueur d'onde. On ne connaît actuellement aucune solution mécanique classique assez précise pour permettre un alignement reproductible sans réglage lors de chaque positionnement.

La présente invention a pour objet de pallier cet inconvénient en proposant un procédé tel que susmentionné, ainsi qu'un dispositif pour la mise en œuvre de ce procédé, qui remplissent les exigences d'une utilisation industrielle.

Dans ce but, le procédé d'alignement selon l'invention est caractérisé en ce que l'on fait subir à l'un des éléments un mouvement oscillatoire selon une boucle fermée dans le plan transverse à l'axe de propagation et oscillant autour d'un point pour lequel l'intensité lumineuse initiale injectée dans le guide d'onde est non nulle, en ce que l'on mesure la valeur maximale de la fonction d'excitation, c'est-à-dire la valeur maximale de l'intensité lumineuse injectée ou une partie proportionnelle autour de ce point, en ce que l'on déduit de ces mesures la direction du maximum de la fonction d'excitation, en ce que l'on détermine l'amplitude du mouvement à générer, en ce que l'on obtient les composantes instantanées du gradient de ladite fonction d'excitation selon deux axes déterminés, et en ce que l'on asservit des moyens mécaniques pour déplacer l'autre élément selon ces axes jusqu'au moment où les composantes du gradient sont nulles.

Selon une forme de réalisation préférée, l'on fait subir le mouvement oscillant au composant optique d'excitation et l'on déplace le guide d'onde à l'aide de ces moyens mécaniques.

De préférence, l'on fait subir au composant optique d'excitation un mouvement circulaire. L'on engendre avantageusement ce mouvement circulaire à l'aide de deux transducteurs piézo-céramiques à mouvement oscillatoire, perpendiculaires entre eux et déphasés de 90 degrés.

Selon une forme de réalisation particulièrement avantageuse, l'on détecte la phase du maximum de la fonction d'excitaiton pour déterminer les composantes instantanées du gradient de la fonction d'excitation selon les deux axes déterminés.

Le dispositif pour la mise en œuvre de ce procédé est caractérisé en ce qu'il comporte un support solidaire des deux transducteurs piézo-céramiques disposés à 90 degrés l'un par rapport à l'autre et portant le composant optique d'excitation, un circuit pour alimenter ces transducteurs pour qu'ils engendrent un déplacement circulaire de ce support, deux moteurs électriques agencés pour déplacer le guide d'onde, et un circuit pour déterminer les composantes du gradient de la fonction d'excitation selon les deux axes déterminés et pour asservir les deux moteurs en fonction de ces composantes. Ces deux moteurs sont de préférence de type à courant continu.

Selon une forme de réalisation préférée du dispositif selon l'invention, le circuit pour alimenter l'un des transducteurs comporte un oscillateur agencé pour alimenter l'un des transducteurs et pour être couplé à un déphaseur de 90 degrés pour alimenter l'autre transducteur.

D'autre part, le circuit pour déterminer les composantes du gradient de la fonction d'excitation et pour asservir les moteurs comporte de préférence un détecteur pour détecter la fonction d'excitation, un amplificateur pour amplifier le signal de détection, un filtre passe-bande accordé à la fréquence de l'oscillateur, la sortie de ce filtre étant connectée d'une part, par l'intermédiaire d'un déphaseur suivi d'un comparateur et d'un monostable, à deux échantillonneurs agencés pour déterminer les composantes du vecteur indiquant la direction du déplacement à faire subir au guide d'onde pour que la fonction d'excitation devienne maximale, et d'autre part, par l'intermédiaire d'un détecteur d'amplitude agencé pour déterminer l'amplitude de la composante alternative du signal d'excitation, à deux multiplicateurs respectivement connectés aux deux échantillonneurs, ces multiplicateurs donnant le gradient et étant connectés par l'intermédiaire d'amplificateurs respectivement aux deux moteurs électriques.

La présente invention sera mieux comprise en référence à la description d'un exemple de réalisation et du dessin annexé dans lequel :

La figure 1 représente une vue schématique illustrant le support des deux transducteurs piézo-céramiques et portant le composant optique d'excitation,

La figure 2 représente une vue schématique illustrant le principe général du procédé selon l'invention, et

La figure 3 représente un schéma-bloc illustrant le circuit électronique d'alimentaiton des transducteurs, de détermination des composantes du gradient et d'asservissement des moteurs.

Comme mentionné précédemment, les parties à aligner, guides d'onde ou fibres optiques, le sont dans les conditions suivantes : soit via une optique faisant sur la face d'entrée du guide d'onde à exciter l'image d'un point source qui peut être la face de sortie d'un laser ou d'une diode électroluminescente ou celle d'une fibre d'excitation, soit par un joint en bout, la partie excitatrice étant placée à quelques microns seulement du guide à exciter.

Du fait de la petitesse et de la légèreté des composants, ces derniers n'étant pas encore encapsulés puisqu'il s'agit d'effectuer un alignement éphémère destiné uniquement à permettre une caractérisation du guide d'onde, il devient aisé de déterminer les composantes instantanées, selon deux axes déterminés, du gradient de la fonction d'excitation définie comme étant l'intensité lumineuse ou une partie proportionnelle de celle-ci, injectée dans le guide d'onde à exciter. Cette estimation sera effectuée au moyen d'une perturbation périodique de la position du composant optique d'excitation. Cette perturbation est avantageusement obtenue en faisant subir à ce composant un mouvement circulaire de très faible rayon.

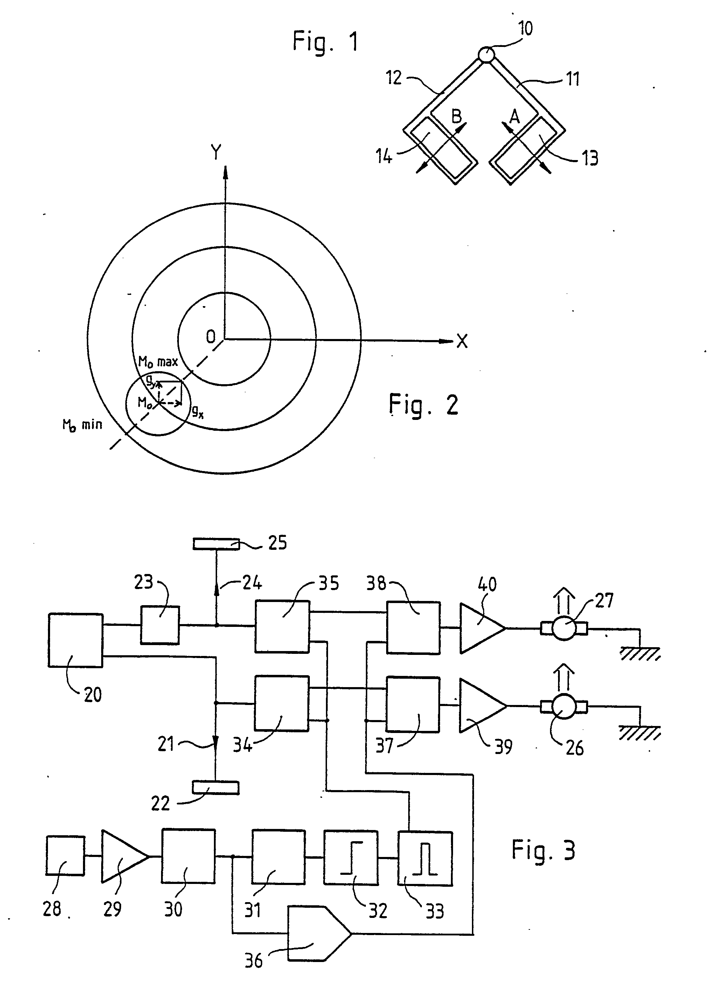

La fig. 1 représente très schématiquement un dispositif permettant d'imposer au composant optique d'excitation un tel mouvement circulaire. Il comporte un support portant le composant optique d'excitation 10, ce support comprenant deux étriers 11 et 12, réalisés par exemple en matière synthétique moulée, dont chacun porte un transducteur piézo-céramique 13, 14 constitué par exemple par une céramique multimorphe. Ces deux transducteurs ont la particularité de vibrer respectivement selon les flèches A et B et transmettent respectivement au composant 10 deux mouvements oscillatoires perpendiculaires et déphasés de 90 degrés dont la résultante est un mouvement circulaire.

En pratique, le but consiste à aligner dans un plan transverse, de préférence selon deux axes orthogonaux X, Y, le guide d'onde par rapport au composant optique d'excitation, en supposant résolue la question du déplacement longitudinal selon le troisième axe Z du repère orthogonal, et en admettant qu'un prépositionnement a été effectué pour que la fonction d'excitation initiale ne soit pas nulle.

La fig. 2 représente un graphique qui illustre le principe de détermination des composantes du gradient. Soit O le point origine du système d'axes orthogonaux X, Y dans le plan transverse, pour lequel la fonction P est maximale. Soit Mo un point pour lequel $P_M \neq 0$. Si l'on fait subir au composant d'excitation un mouvement oscillatoire tel que mentionné, la fonction d'excitation passe obligatoirement par une valeur $P_{0\,max}$ et une valeur $P_{0\,min}$. Les composantes $g_X$, $g_Y$ selon les axes X et Y du point correspondant à la valeur $P_{0\,max}$ permettent de déterminer la direction du point O, c'est-à-dire la direction dans laquelle il convient de déplacer le guide d'onde pour que l'on atteigne le maximum de la fonction d'onde.

Les cercles concentriques représentent par exemple les lignes d'équi-puissance. Toutefois on pourrait imaginer que les lignes d'équi-puissance ne sont pas circulaires mais présentent une forme différente, par exemple elliptique.

Le circuit électronique comporte, comme le montre la fig. 3, un oscillateur 20 qui transmet un signal sinusoïdal de fréquence f dans le sens de la flèche 21 à l'un des transducteurs 22, qui engendre un déplacement selon l'axe X. Un déphaseur 23, transmet dans le sens de la flèche 24, à l'autre transducteur 25, un signal sinusoïdal déphasé de 90 degrés par rapport au précédent. Ce signal provoque une vibration du transducteur 25 selon l'axe Y. Ces composants constituent le circuit d'alimentation des transducteurs. Le circuit de détection du gradient et d'asservissement des moteurs à courant continu 26 et 27, qui assurent respectivement les déplacements du guide d'onde selon les deux axes orthogonaux X et Y, comportent un détecteur 28 qui détecte l'intensité lumineuse transmise représentant la fonction d'excitation, un amplificateur 29, un filtre passe-bande 30 accordé sur la fréquence f et chargé d'éliminer l'influence des harmoniques supérieures dues à des non-linéarités et à l'anisotropie du champ lumineux. La sortie du filtre 30 est connectée d'une part, par l'intermédiaire d'un déphaseur 31, suivi d'un comparateur 32 et d'un monostable 33, à deux échantillonneurs 34 et 35, et d'autre part, à travers un détecteur d'amplitude 36, à l'une des entrées de deux multiplicateurs 37 et 38, dont l'autre entrée est respectivement connectée aux deux échantillonneurs 34 et 35. Le circuit comportant le déphaseur 31, le comparateur 32 et le monostable 33 permet d'engendrer une impulsion pour chaque maximum instantané $P_{0\,max}$ de la fonction d'excitation. Les échantillonneurs 34 et 35 déterminent respectivement les composantes $g_X$ et $g_Y$ du vecteur indiquant la direction du déplacement à faire subir au guide d'onde pour que la fonction d'excitation devienne maximale. Le détecteur d'amplitude 36 permet de déterminer l'amplitude de la composante alternative du signal d'excitation, c'est-à-dire l'amplitude du mouvement à faire subir au guide d'onde. Par la multiplication de l'amplitude de la composante alternative du signal d'excitation avec $g_X$ et $g_Y$ on obtient le gradient selon les deux axes. Les deux gradients commandent par l'intermédiaire de deux amplificateurs 39 et 40, les deux moteurs 26 et 27 responsables des déplacements du guide d'onde.

## Revendications

1. Procédé d'alignement d'un guide d'onde par rapport à un composant optique d'excitation, sans contact entre les deux éléments, caractérisé en ce que l'on fait subir à l'un des éléments un mouvement oscillatoire selon une boucle fermée dans le plan transverse à l'axe de propagation et oscillant autour d'un point pour lequel l'intensité lumineuse initiale injectée dans le guide d'onde est non nulle, en ce que l'on mesure la valeur maximale de la fonction d'excitation, c'est-à-dire la valeur maximale de l'intensité lumineuse injectée ou une partie proportionnelle autour de ce point, en ce que l'on déduit de ces mesures la direction du maximum de la fonction d'excitation, ce que l'on détermine l'amplitude du mouvement à générer, en ce que l'on obtient les composantes instantanées du gradient de ladite fonction d'excitation selon deux axes déterminés et en ce que l'on asservit des moyens mécaniques (26, 27) pour déplacer l'autre élément selon ces axes jusqu'au moment où les composantes du gradient sont nulles.

2. Procédé selon la revendication 1, caractérisé en ce que l'on fait subir le mouvement oscillant au composant optique d'excitation, et en ce que l'on déplace le guide d'onde à l'aide de ces moyens mécaniques.

3. Procédé selon la revendication 2, caractérisé en ce que l'on fait subir au composant optique d'excitation un mouvement circulaire.

4. Procédé selon la revendication 3, caractérisé en ce que l'on engendre le mouvement circulaire du composant optique d'excitation à l'aide de deux transducteurs piézo-céramiques (22, 25) à mouvement oscillatoire, perpendiculaires entre eux et déphasés de 90 degrés.

5. Procédé selon la revendication 4, caractérisé en ce que l'on détecte la phase du maximum de la fonction d'excitation pour déterminer les composantes instantanées du gradient selon les deux axes déterminés.

6. Dispositif pour la mise en œuvre du procédé selon la revendication 1, caractérisé en ce qu'il comporte un support solidaire de deux transducteurs piézo-céramiques (22, 25) disposés à 90 degrés l'un par rapport à l'autre et portant le composant optique d'excitation (10), un circuit pour alimenter ces transducteurs pour qu'ils engendrent un déplacement circulaire de ce support, deux moteurs électriques (26, 27) agencés pour déplacer le guide d'onde selon deux axes déterminés, et un circuit pour déterminer les composantes du gradient de la fonction d'excitation selon les deux axes déterminés et pour asservir les deux moteurs en fonction de ces composantes.

7. Dispositif selon la revendication 6, caractérisé en ce que les moteurs électriques (26, 27) sont de type à courant continu.

8. Dispositif selon la revendication 6, caractérisé en ce que le circuit pour alimenter les transducteurs (22, 25) comportent un oscillateur (20) agencé pour alimenter l'un des transducteurs (22) et pour être couplé à un déphaseur (23) de 90 degrés pour alimenter l'autre transducteur (25).

9. Dispositif selon les revendications 6 et 8, caractérisé en ce que le circuit pour déterminer les composantes du gradient de la fonction d'excitation et pour asservir les moteurs (26, 27) comporte un détecteur (28) pour détecter la fonction d'excitation, un amplificateur (29) pour amplifier le signal de détection, un filtre passe-bande (30) accordé à la fréquence de l'oscillateur, la sortie de ce filtre étant connectée d'une part, par l'intermédiaire d'un déphaseur (31), suivi d'un comparateur (32) et d'un monostable (33), à deux échantillonneurs (34, 35) agencés pour déterminer les composantes du vecteur indiquant la direction du déplacement à faire subir au guide d'onde pour que la fonction d'excitation devienne maximale, et d'autre part, par l'intermédiaire d'un détecteur d'amplitude (36), agencé pour déterminer l'amplitude de la composante alternative du signal d'excitation, à deux multiplicateurs (37, 38), respectivement connectés aux deux échantillonneurs (34, 35), ces multiplicateurs donnant le gradient et étant connectés par l'intermédiaire d'amplificateurs (39, 40) respectivement aux deux moteurs électriques (26, 27).

## Claims

1. Method of alignment of a wawe guide in respect to an optical excitation component without contact between the two elements, characterized in that one of the elements is submitted to an oscillatory movement along a closed loop in a plane transverse to the propagation axis and oscillating around a point for which the initial light intensing injected in the wawe guide is not zero, in that the maximal value of the excitation function i. e. the maximal value of injected light intensity or a proportional part around this point is measured, in that the direction of the maximum of the excitation function is deduced from these measurements, in that the amplitude of the movement to be generated is determined, in that the instantaneous components of the gradient of said excitation function along two determined axes are obtained, and in that the mechanical means (26, 27) are brought under control for moving the other element along these axes until the components of the gradient are zero.

2. Method according to claim 1, characterized in that the oscillatory movement is imposed onto the optical excitation components and in that the wave guide is moved by these mechanical means.

3. Method according to claim 2, characterized in that a circular movement is imposed onto the optical excitation component.

4. Method according to claim 3, characterized in that the circular movement of the optical excitation component is created by means of two piezo-ceramic transducers (22, 25) of oscillatory movement which are perpendicular to each other and phase shifted by 90°.

5. Method according to claim 4, characterized in that the phase of the maximum of the excitation function is detected to determine the instantaneous components of the gradient along two determined axes.

6. Device for using the method according to claim 1, characterized in that it comprises a support integral with two piezo-ceramic transducers (22, 25) arranged at 90° one to the other and carrying the optical excitation component (10), a supply circuit for said transducers for transmitting a circular movement to said support, two electrical motors (26, 27) provided to move the wawe guide along two determined axes and a circuit for determining the components of the gradient of the excitation function along two determined axes and for controlling the two motors as a function of these components.

7. Device according to claim 6, characterized in that the electrical motors (26, 27) are of DC type.

8. Device according to claim 6, characterized in that the supply circuit for the transducers (22, 25) comprises one oscillator (20) provided to supply one (22) of the transducers and to be coupled with a phase shifter (23) of 90° for supply to the other transducer (25).

9. Device according to claims 6 and 8, characterized in that the circuit for determining the components of the gradient of the excitation function and for controlling the motors (26, 27) comprises a detector (28) for detecting the excitation function, an amplifier (29) for amplifying the detection signal, a low-pass filter (30) set to the frequency of the oscillator, the exit of this filter being connected to one part via a phase shifter (31) followed by a comparator (32) and a monostable (33), to two samplers (34, 35) provided for determining the components of a vector which indicates the direction of the movement to be imposed to the wave guide in order to obtain the maximum of the excitation function and to the other parts, via the intermediary of an amplitude detector (36) provided to determine the amplitude of the alternative component of the excitation signal, to two multiplicators (37, 38) which are connected respectively to the two samplers (34, 35), these multiplicators providing the gradient and being connected via the intermediary of amplifiers (39, 40) respectively to the two electric motors (26, 27).

## Patentansprüche

1. Verfahren zur Fluchtung eines Wellenleiters in Bezug auf ein optisches Erregerbestandteil, ohne daß sich die zwei Elemente berühren, dadurch gekennzeichnet, daß man eines der Elemente eine Schwingbewegung in Form einer geschlossenen Schleife ausführen läßt und zwar in einer zur Fortpflanzungsachse senkrechten Ebene und um einen Punkt schwingend, für den die anfangs in den Wellenleiter eingegebene Lichtintensität nicht Null ist, daß man den maximalen Wert der Erregungsfunktion mißt, d. h. den maximalen Wert der eingegebenen Lichtintensität oder einen proportionalen Anteil um diesen Punkt, daß man aus diesen Messungen die Richtung des Maximums der Erregungsfunktion ableitet, daß man die Amplitude der zu erzeugenden Bewegung bestimmt, daß man die augenblicklichen Komponenten des Gradienten der Erregungsfunktion nach zwei bestimmten Achsen erhält und daß man mechanische Einrichtungen (26, 27) steuert, um das andere Element so lange auf den Achsen zu verschieben, bis die Komponenten des Gradienten Null sind.

2. Verfahren nach Anspruch 1, dadurch gekennzeichnet, daß man die Schwingbewegung vom optischen Bauteil der Erregung ausführen läßt und daß man den Wellenleiter mit Hilfe dieser mechanischen Einrichtungen verschiebt.

3. Verfahren nach Anspruch 2, dadurch gekennzeichnet, daß man den optischen Bauteil der Erregung eine Kreisbewegung ausführen läßt.

4. Verfahren nach Anspruch 3, dadurch gekennzeichnet, daß man die Kreisbewegung des optischen Bauteils der Erregung mittels zweier piezo-keramischer Schwingwandler (22, 25) erzeugt, die senkrecht zueinander stehen und um 90 Grad phasenversetzt arbeiten.

5. Verfahren nach Anspruch 4, dadurch gekennzeichnet, daß man die Phase für das Maximum der Erregungsfunktion abtastet, um die augenblicklichen Komponenten des Gradienten entsprechend den zwei bestimmten Achsen zu ermitteln.

6. Vorrichtung zur Durchführung des Verfahrens nach Anspruch 1, dadurch gekennzeichnet, daß sie einen Träger aufweist, der formschlüssig mit zwei um 90 Grad zueinander versetzten piezokeramischen Wandlern (22, 25) verbunden ist und der den optischen Bestandteil der Erregung (10) trägt, sowie eine Schaltung zur Versorgung der Wandler, damit sie diesen Träger kreisförmig bewegen, zwei Elektromotoren (26, 27), die dazu dienen, den Wellenleiter nach zwei bestimmten Achsen zu verschieben, und eine Schaltung zur Bestimmung der Komponenten des Gradienten der Erregungsfunktion entsprechend den zwei bestimmten Achsens und um die zwei Motoren in Abhängigkeit dieser Komponenten zu steuern.

7. Vorrichtung nach Anspruch 6, dadurch gekennzeichnet, daß die Motoren (26, 27) für Gleichstrom ausgelegt sind.

8. Vorrichtung nach Anspruch 6, dadurch gekennzeichnet, daß die Schaltung zur Versorgung der Wandler (22, 25) einen Schwinger (20) aufweist, der dazu dient, einen der Wandler (22) zu versorgen und der über einen 90 Grad-Phasenschieber den anderen Wandler (25) versorgt.

9. Vorrichtung nach den Ansprüchen 6 und 8, dadurch gekennzeichnet, daß die Schaltung zur Bestimmung der Komponenten des Verlaufs der Erregungsfunktion und zur Steuerung der Motoren (26, 27) einen Fühler (28) aufweist, um die Erregungsfunktion zu erfassen, einen Verstärker (29) um das Meßsignal zu verstärken, ein auf die Schwingerfrequenz abgestimmtes Bandpaß-Filter (30), wobei der Ausgang dieses Filters einerseits mittels eines Phasenschiebers (31), gefolgt von einem Differenzierglied (32), sowie einem Monostabilglied (33) mit zwei Abfrageschaltern (34, 35) verbunden ist, welche dazu dienen, die Komponenten des Vektors zu bestimmt, der die Richtung anzeigt, in welche der Wellenleiter zu verschieben ist, um das Maximum der Erregungsfunktion zu erreichen, und andererseits mittels eines zur Messung der Größe der wechselnden Komponente des Erregungssignals dienenden Amplituden-Abtasters (36) mit zwei jeweils mit den zwei Abfrageschaltern (34, 35) verbundenen Vervielfachern (37, 38), wobei diese Vervielfacher den Funktionsverlauf angeben und die schließlich mittels Verstärker (39, 40) jeweils mit den zwei Elektromotoren (26, 27) verbunden sind.

Fig. 1

Fig. 2

Fig. 3